# EUROPEAN PATENT APPLICATION

(11) **EP 1 182 624 A2**
(43) Date of publication of application: **27.02.2002**
(21) Application number: 01113668.6
(22) Date of filing: 19.06.2001
(51) Int. Cl.: G07F 17/16, G07F 7/02, G07F 19/00

(54) **Data sale immediate settling method and prepaid card**

(30) Priority: 21.06.2000 JP 2000186433
(71) Applicant: NEC CORPORATION, Tokyo (JP)
(72) Inventor: Shichi, Shuji, Minato-ku, Tokyo (JP)
(74) Representative: VOSSIUS & PARTNER

(57) **Abstract**

To enable settlement with a real-time nature and a high security that needs no certification data directly connected to an individual.

Actions on a purchaser's end include an action of inputting the purchaser's ID, the n-th action of inputting the n-th password used at the n-th time to a terminal, an action of inputting the (n+1)-th password used at the (n+1)-th time to the terminal, and an action of inputting contents to the terminal. Actions on a seller's end include an action of distributing the contents to the purchaser, and an action of subtracting a price corresponding to the contents from the balance in a database. A serial number being peculiar to the seller and being unchangeable is collated with a password being changeable, and the password can be changed every time a purchase is implemented so that a security is significantly raised. Unchanging the password under a state where it can be changed is substantially equal to changing for a third party so that it is not necessary to change the password every time a purchase is implemented. The prepaid card can safely be distributed to an unspecified number of people.

## Description

The present invention relates to a data sale immediate settling method and a prepaid card, and more particularly to a data sale immediate settling method and a prepaid card that can smoothly implement distribution of sounds and images on the Internet, and a settlement of its price.

As a technique of receiving distribution of data such as sounds or images on the Internet, or of collecting a necessary price for accessing to a special service site or an operator, there have been known settlements by using a credit card and by a contract of a payment before or after the action. Such settlements are lack of a real-time nature. By such settlements, the data used for a certification required for the settlements are directly connected to an individual.

A settlement requires the real-time nature. Moreover, it is preferable that the settlement is implemented without using certification data directly connected to an individual.

An object of the present invention is to provide a data sale immediate settling method and a prepaid card with a real-time nature.

Another object of the present invention is to provide a data sale immediate settling method and a prepaid card with a real-time nature and a high security.

Still another object of the present invention is to provide a data sale immediate settling method and a prepaid card with a real-time nature and a high security wherein certificate data directly connected to an individual is not used.

A data sale immediate settling method according to the present invention includes actions on a purchaser's end include an action of inputting the purchaser's ID, the n-th action of inputting the n-th password used at the n-th time to a terminal, an action of inputting the (n+1) - th password used at the (n+1) - th time to the terminal, and an action of inputting contents to the terminal. Actions on a seller's end include an action of distributing the contents to the purchaser, and an action of subtracting a price corresponding to the contents from the balance in a database.

A serial number being peculiar to the seller and being unchangeable is collated with a password being changeable, and the password can be changed every time a purchase is implemented so that a security is significantly raised. Unchanging the password under a state where it can be changed is substantially equal to changing for a third party so that it is not necessary to change the password every time a purchase is implemented.

The actions on the purchaser's end further include an action of re-inputting the (n+1)-th password used at the (n+1)-th time, and the action on the seller's end is to collate an agreement between the (n+1)-th password and the re-inputted (n+1)-th password. Then, the changed passwords are commonly confirmed on the purchaser's end and the seller's end. The action on the seller's end is to register the (n+1)-th password on the basis of the collation of the agreement.

The actions on the seller's end further include an action of indicating the balance and the contents to the purchaser. The seller's end confirms that the balance exceeds the price (a sales price) so as to make the settlement safe. A purchase is permitted to the purchaser on the basis of the confirmation. The action of inputting the contents to the terminal is equal to a purchaser's action of clicking the contents indicated on the terminal so that purchase operation is simplified. The action of distribution is implemented after the action of confirmation so that the safety of the settlement is established.

The actions on the seller's end are to update the balance by subtracting the price from the balance and to register the updated balance. The updated balance is indicated to the purchaser. The action on the seller's end is to register a purchase date corresponding to the contents, the purchase, and the purchaser. The registration becomes a basic material of statistics related to distribution of the contents. The indication is implemented on a screen of the terminal. The indication can also be implemented by a speaker of the terminal.

A data sale immediate settling method according to the present invention is a data sale immediate settling method wherein, by using a sales system including a portal site arranged on a purchaser' s end, a database arranged on a seller' s end, and a communication network connecting the portal site and the database to each other, the seller distributes, sells, and settles contents instructed by the purchaser, a price contracted between the purchaser and the seller is registered to the database, and the settlement in the database is implemented by subtracting a price of the contents purchased by the purchaser. The card being equivalent to cash, which is the prepaid card, is virtually created on the database end, and operation is attempted without cash within a fixed and limited price.

A prepaid card according to the present invention has a one-to-one correspondence based on a serial number with a virtual prepaid card, whose password is variably registered to a database, and which virtually exists in the database. The serial number and the password used at the first time are printed so that they can be visible by a user. A cover is provided to the card, and the printed serial number and the printed password are hidden by the cover before the first-time use so that the security of the first-time password that cannot be selected by the user becomes higher. Such a prepaid card can safely be distributed to an unspecified number of people.

A serial number of the purchaser determined at the time of the contract and a password used by the purchaser at the next-time purchase are transmitted from the portal site to the database, and the password is registered to the database until the next-time purchase is implemented so that the security of a system for implementing the operation without cash becomes higher.

The invention will be explained in more detail in conjunction with the appended drawings, wherein:
FIG. 1 is a table showing a prepaid card provided in a database of an embodiment of a data sale immediate settling method according to the present invention;
FIG. 2 is a time chart showing an action procedure of the embodiment of the data sale immediate settling method according to the present invention;
FIG. 3 is a time chart showing a continuation of the action procedure in FIG. 2;
FIG. 4 is a time chart showing an action procedure of another embodiment of the data sale immediate settling method according to the present invention; and
FIG. 5 is a time chart showing a continuation of the action procedure in FIG. 4.

Corresponding to the figures, a preferred embodiment of a data sale immediate settling method according to the present invention is composed of an action chain including an action of subtracting a price being necessary for distribution from a virtual prepaid card provided in the database. An explanation will be given of a settling method for electronic commerce of information contents such as sound and image services on the web (they will be indicated as web contents below) by using the prepaid card and the database. Although the prepaid card is a virtual card written in the database, a real card with information corresponding to the prepaid card is created. On the real prepaid card, a serial number, a first-time password number, and an expiration date are visibly printed. The real prepaid card is covered so that a purchaser of the prepaid card can see the first-time password number after scratching the cover.

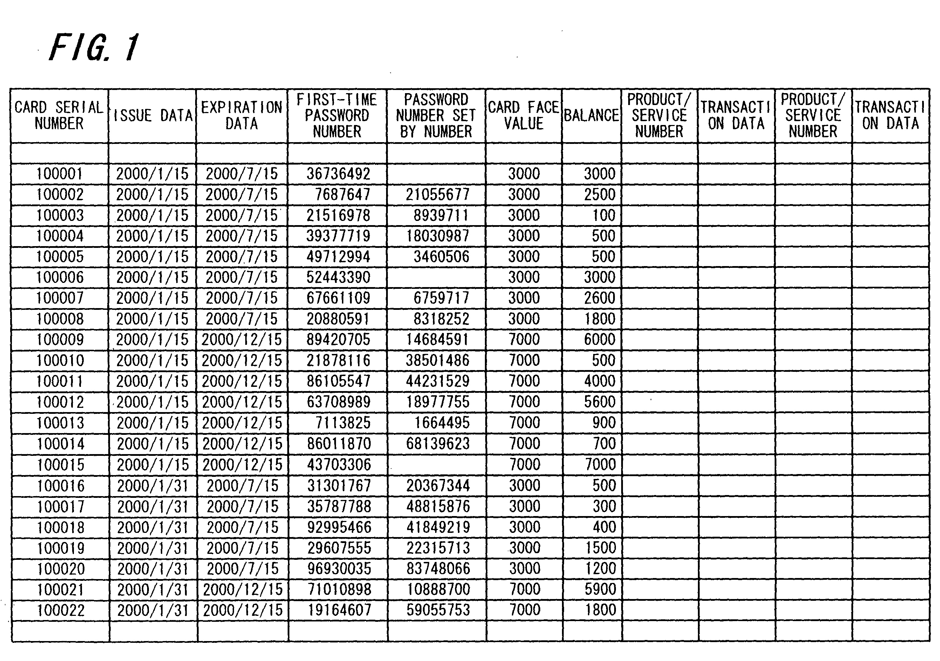

As shown in FIG. 1, there are registered to the database an issue date, a serial number, a expiration date, a first-time password number, a user set password number, a card face value, the balance, a transaction product/service number, and a transaction date that all have a one-to-one correspondence with those of the specified prepaid card.

A portal site is located between a user and the database. The portal site receives an input of the card serial number and the password number from the user, and inquires whether or not an access to the database is possible and whether or not the access is permitted.

To the content site, information (data) contents such as sounds or images are registered as products/services. The content site exchanges the data related to a transaction with the user with the database.

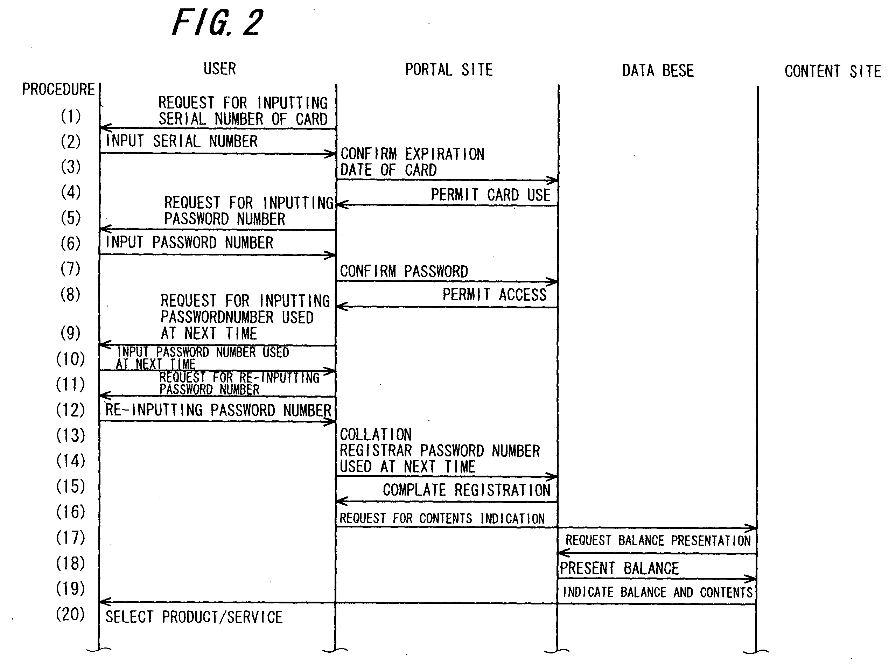

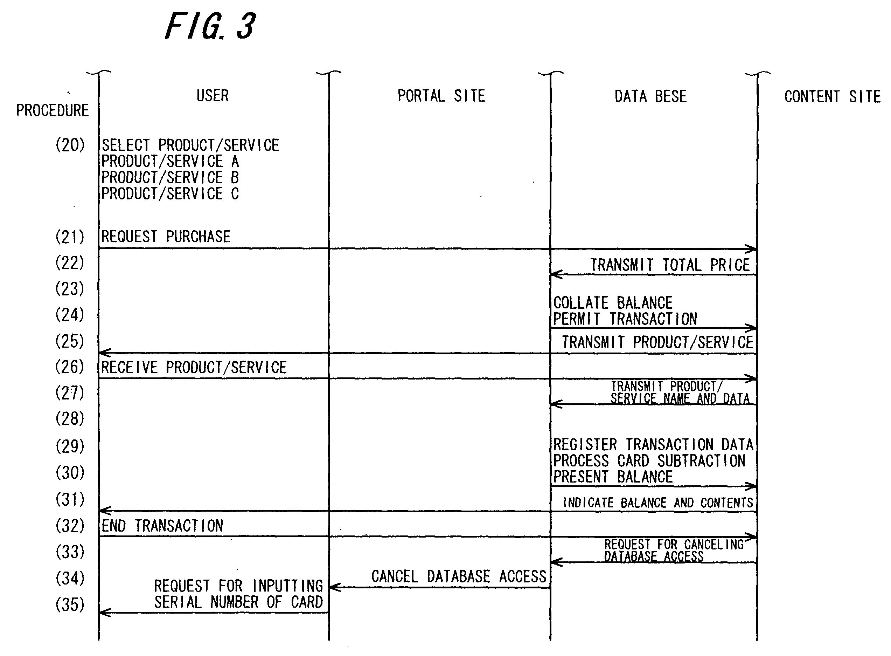

FIG. 2 and FIG. 3 show an action procedure forming a chain of a series of actions of the transaction and settlement of the web contents by using the prepaid card. The user's terminal is already connected to the portal site on the Internet.

### Action 1:

The portal site indicates a screen of input waiting that waits for an input of the serial number of the card.

### Action 2:

The user inputs the serial number from the terminal.

### Action 3:

The portal site that received the input of the serial number confirms the expiration date of the card to the database.

### Action 4:

If the card is not expired yet, the database permits the portal site an access. If the card is expired, the database does not permit the portal site the access. In the case where the access is not permitted, the portal site indicates the fact that the card cannot be used on the portal site.

### Action 5:

The portal site implements indication of input waiting that waits for the input of the password number.

### Action 6:

The user inputs the password number to the portal site.

### Action 7:

The portal site receiving the input of the password number requests confirmation of whether or not the password number has a one-to-one correspondence with the serial number to the database.

### Action 8:

If the password number has the one-to-one correspondence with the serial number, the database permits the portal site a further access.

### Action 9:

On the basis of the permission, the portal site requests the user to input the password number used at the next time.

### Action 10:

The user inputs the next-time password number used for the access at the next time.

### Action 11:

The portal site requests the user to re-input the next-time password number.

### Action 12:

The next-time password number is re-inputted.

### Action 13:

The portal site collates two next-time password numbers that are used at the next time and were inputted twice with each other.

### Action 14:

If two next-time password numbers coincide to each other, the portal site registrars the next-time password number to the database.

### Action 15:

The database notices the portal site that it is completed to re-write the this-time password number into the next-time password number.

### Action 16:

The portal site receiving the notice requests the content site to indicate the contents.

### Action 17:

The content site requests the database to indicate the card balance.

### Action 18:

The balance is presented from the database, and the balance is indicated on the portal site.

### Action 19:

The content site indicates the balance and the contents together to the user.

### Action 20 and Action 21:

The user selects product/service by clicking the contents with a purchasing button, and the content site receives the data of the selected contents.

### Action 22:

The content site calculates a total price and transmits the total price to the database.

### Action 23:

The database subtracts the purchased total price from the present balance, and inquires whether the balance becomes below zero.

### Action 24:

When a result of the balance calculation is positive, the database gives the content site permission for a transaction. If the balance is negative, the database instructs the content site to indicate insufficiency of the balance to the user.

### Action 25:

The content site transmits and distributes the product/service and the contents to the user.

### Action 26:

The content site receives information of reception of the product/service from the user.

### Action 27:

The content site transmits the name of the product/service and the date of the transaction implemented at the present to the database.

### Action 28:

The database registers the transaction data.

### Action 29:

The database implements a subtracting process of the card balance.

### Action 30:

Information of the balance is presented to the content site as a result of the transaction.

### Action 31:

The content site indicates the balance and the contents to the user.

### Action 32:

The user transmits the end of the transaction.

### Action 33:

The content site cancels a link to the database by receiving the transmission.

### Action 34:

The database cancels a link to the portal site.

### Action 35:

A screen of the portal site returns to the input waiting for the serial number of the card.

In this manner, the password number is changed every time of use so that the higher security is sustained. It is unnecessary to certify information related to an individual such as a credit card number, bank account number, address, or name when the card is used. Therefore, the card can be a gift or be used for a promotion of a company. By recording a kind, date, and volume of the transacted contents on the database of the password number and the serial number of the card, information used for market research can be collected.

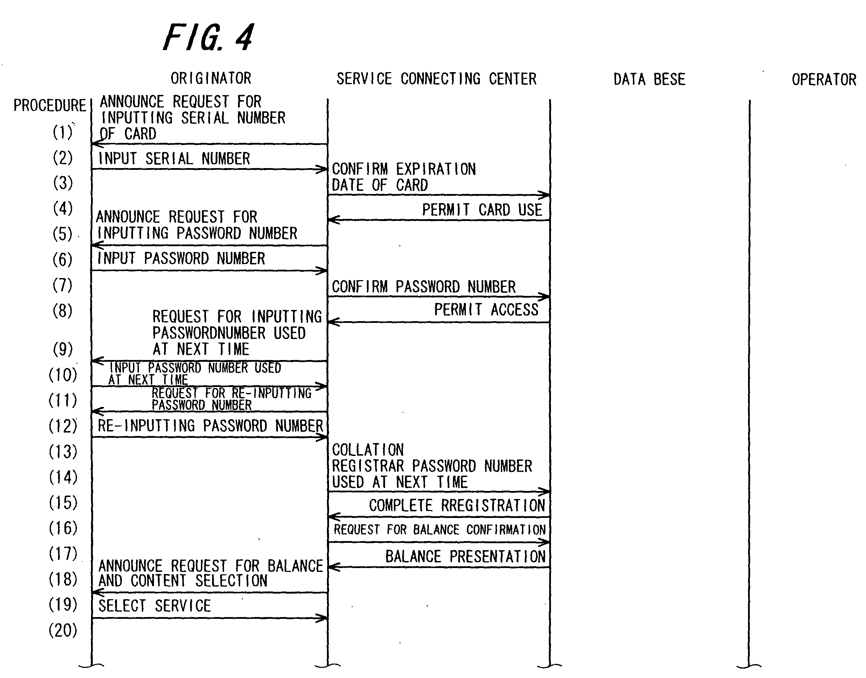

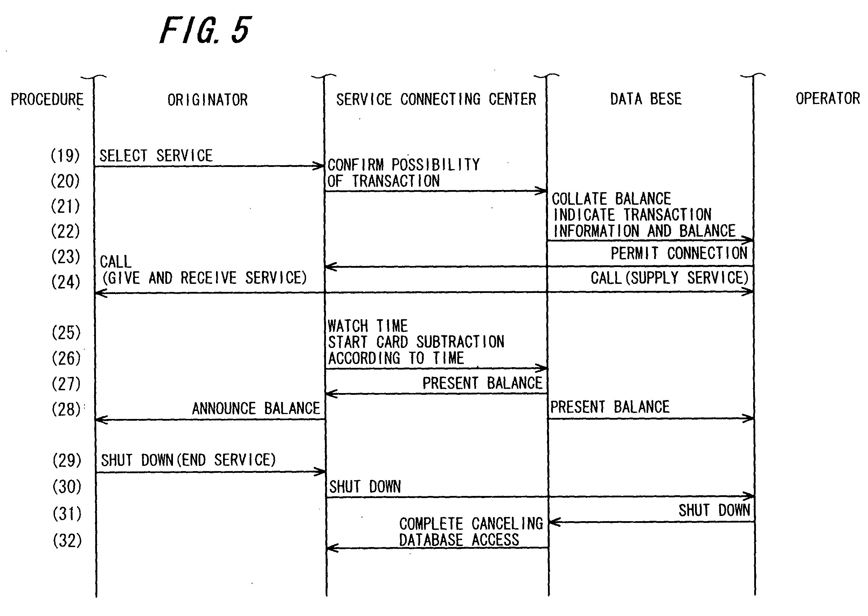

FIG. 4 and FIG. 5 show another embodiment of the data sale immediate settling method according to the present invention. This embodiment can be applied not only to the transaction settlement on the Internet, but also to settlement of giving and receiving services via an operator by a telephone call. From the state where an originator completes an arrival on a service connecting center, the following actions will be described.

### Action 1:

An announcement requesting an input of the serial number of the card is transmitted from the service connecting center to the originator.

### Action 2:

The originator inputs the serial number by pressing push buttons of a telephone.

### Action 3:

By receiving the input, the service connecting center confirms the expiration date of the card to the database.

### Action 4:

The database permits the use of the card.

### Action 5:

By receiving the permission, the service connecting center transmits an announcement requesting the input of the password number to the originator.

### Action 6:

The originator inputs the password number.

### Action 7:

By receiving the input, the service connecting center takes a certification to the database. If this is the access for the first time, collation is taken with the serial number and the password number combined with the serial number in the database, and then, re-writing the password number is prompted to the user. If this is the access for the second time or more, the collation is taken with the serial number of the card and the password number set by the user.

### Action 8:

An access permission is released from the database.

### Action 9:

By receiving the permission, the service connecting center requests the originator to input the password number used at the next time.

### Action 10:

The originator inputs the password number used for the access at the next time.

### Action 11:

The service connecting center requests the originator to re-input the password number.

### Action 12:

The password number is re-inputted.

### Action 13:

The service connecting center collates the password numbers that are used at the next time, and were inputted twice with each other.

### Action 14:

If the numbers coincide to each other, the password number is registered to the database.

### Action 15:

Completion of re-writing of the password is noticed from the database to the service connecting center.

### Action 16:

The service connecting center confirms the card balance to the database.

### Action 17:

The balance data are presented to the service connecting center by the database.

### Action 18:

By receiving the data, the service connecting center transmits the card balance and the announcement requesting introduction and selection of the service contents to the originator.

### Action 19:

The originator selects the service.

### Action 20:

The service connecting center inquires the database whether or not the price of the service selected by the originator is within the present balance.

### Action 21:

The database refers to the balance.

### Action 22:

The database indicates transaction information and the balance to the operator.

### Action 23:

By seeing them, the operator releases the permission for connection to the service connecting center.

### Action 24:

The service connecting center connects a path between the originator and the operator, and then a call (service) is started.

### Action 25:

During the operation, the service connecting center watches time.

### Action 26:

After a certain time, subtraction of a card rate according to the time is instructed to the database.

### Action 27:

By receiving the instruction, the database implements a subtract process of the card balance, and presents the resulted balance to the service connecting center.

### Action 28:

The service connecting center transmits the announcement of the subtracted balance to the originator talking to the operator. If the balance presented by the database is zero, the call path is shut down with an alarm sound.

### Action 29:

The originator shuts down the call path, and the service is ended.

### Action 30:

A signal for shutting down the call path is sent to the operator so as to introduce the completion of the service.

### Action 31:

The operator shuts down the link to the database after confirming the completion of the service.

### Action 32:

The link between the database and the service connecting center is cancelled.

Concerning the data sale immediate settling method and the prepaid card according to the present invention, settlement is implemented by subtraction from the balance of the prepaid card at the same time as a purchase of information contents. Therefore, from a user's point of view, reception of product/service and a payment of the price can simultaneously be done on the spot. From a content supplier's point of view, the price can be prevented from being uncollected because the card is previously sold, and a cash flow can be improved.

Since only a dial-up access number to the web, a password number for the first-time use, and a serial number are indicated on the prepaid card of a real card, the card can be produced safely at a reasonable price.

## Claims

1. A data sale immediate settling method comprising actions on a purchaser's end and actions on a seller's end wherein:
the actions on the purchaser's end comprise an action of inputting the purchaser's ID, the n-th action of inputting the n-th password used at the n-th time to a terminal, an action of inputting the (n+1)-th password used at the (n+1)-th time to the terminal, and an action of inputting contents to the terminal; and
the actions on the seller's end comprise an action of distributing the contents to the purchaser, and an action of subtracting a price corresponding to the contents from the balance in a database.

2. A data sale immediate settling method according to claim 1 wherein:
the actions on the purchaser's end further comprise an action of re-inputting the (n+1)- th password used at the (n+1)-th time; and
the actions on the seller's end further comprise an action of collating an agreement between the (n+1) - th password and the re-inputted (n+1) - th password.

3. A data sale immediate settling method according to claim 2 wherein the actions on the seller's end further comprise an action of registering the (n+1) - th password on the basis of the collation of the agreement.

4. A data sale immediate settling method according to claim 3 wherein the actions on the seller's end further comprise an action of indicating the balance and the contents to the purchaser.

5. A data sale immediate settling method according to claim 4 wherein:
the actions on the seller's end further comprise an action of confirming that the balance exceeds the price, and an action of permitting the purchaser a purchase on the basis of the confirmation; and
the action of inputting the contents to the terminal is equal to a purchaser' s action of clicking the contents indicated on the terminal.

6. A data sale immediate settling method according to claim 5 wherein the action of distribution is implemented after the action of confirmation.

7. A data sale immediate settling method according to claim 6 wherein the actions on the seller's end further comprise actions of updating the balance by subtracting the price from the balance and of registering the updated balance, and an action of indicating the updated balance to the purchaser.

8. A data sale immediate settling method according to claim 7 wherein the actions on the seller's end further comprise an action of registering a purchase date corresponding to the contents, the purchase, and the purchaser.

9. A data sale immediate settling method according to claim 8 wherein the indication is implemented on a screen of the terminal.

10. A data sale immediate settling method according to claim 9 wherein the indication is implemented by a speaker of the terminal.

11. A data sale immediate settling method wherein:
by using a sales system including a portal site arranged on a purchaser's end, a database arranged on a seller's end, and a communication network connecting the portal site and the database to each other, the seller distributes, sells, and settles contents instructed by the purchaser;
a price contracted between the purchaser and the seller is registered to the database; and
the settlement in the database is implemented by subtracting a price of the contents purchased by the purchaser.

12. A data sale immediate settling method according to claim 11 wherein:
a serial number of the purchaser determined at the time of the contract and a password used by the purchaser at the next-time purchase are transmitted from the portal site to the database; and
the password is registered to the database until the next-time purchase is implemented.

13. A prepaid card having one-to-one correspondence based on a serial number with a virtual prepaid card, whose password is variably registered to a database, and which virtually exists in the database.

14. A prepaid card according to claim 13 on which the serial number and the password used at the first time are visibly printed.

15. A prepaid card according to claim 14, which includes a cover, and on which the printed serial number and the printed password are hidden by the cover before the first-time use.
